(19) Europäisches Patentamt
European Patent Office
Office européen des brevets

(11) **EP 1 821 468 B1**

(12) **FASCICULE DE BREVET EUROPEEN**

(45) Date de publication et mention
de la délivrance du brevet:
**19.08.2009 Bulletin 2009/34**

(51) Int Cl.:
***H04L 12/56*** *(2006.01)*

(21) Numéro de dépôt: **06300143.2**

(22) Date de dépôt: **16.02.2006**

(54) **Dispositif d'allocation de capacités de liens par prise en compte de répartition de charge pour un réseau de communication**

Vorrichtung zur Zuweisung von Verbindungsbandbreiten unter Berücksichtigung der Lastverteilung für ein Kommunikationsnetzwerk

Device for link capacity allocation taking into account load balancing for a communications network

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**22.08.2007 Bulletin 2007/34**

(73) Titulaire: **Alcatel Lucent**
**75008 Paris (FR)**

(72) Inventeurs:
• **Randriamasy, Claire-Sabine**
**92190 Meudon (FR)**
• **Fournie, Laurent**
**75009 Paris (FR)**
• **Hong, Dohy**
**94120 Fontenay sous Bois (FR)**

(74) Mandataire: **Sciaux, Edmond**
**Alcatel Lucent**
**Intellectual Property & Standards**
**54 Rue La Boétie**
**75008 Paris (FR)**

(56) Documents cités:
**US-B1- 6 647 008**

• **BÜR K ET AL: "A virtual path routing algorithm for ATM networks based on the equivalent bandwidth concept" COMPUTER COMMUNICATIONS, ELSEVIER SCIENCE PUBLISHERS BV, AMSTERDAM, NL, vol. 23, no. 4, février 2000 (2000-02), pages 379-394, XP004188274 ISSN: 0140-3664**
• **ROCH GUERIN ET AL: "EQUIVALENT CAPACITY AND ITS APPLICATION TO BANDWIDTH ALLOCATION IN HIGH-SPEED NETWORKS" IEEE JOURNAL ON SELECTED AREAS IN COMMUNICATIONS, IEEE SERVICE CENTER, PISCATAWAY, NJ, US, vol. 9, no. 7, 1 septembre 1991 (1991-09-01), pages 968-981, XP000272772 ISSN: 0733-8716**
• **HUERTA M ET AL: "Model for flows allocation and cost minimization in MPLS networks" DEVICES, CIRCUITS AND SYSTEMS, 2004. PROCEEDINGS OF THE FIFTH IEEE INTERNATIONAL CARACAS CONFERENCE ON PUNTA CANA, DOMINICAN REPUBLIC NOVEMBER 3-5,2004, PISCATAWAY, NJ, USA,IEEE, 3 novembre 2004 (2004-11-03), pages 244-248, XP010767760 ISBN: 0-7803-8777-5**

**Description**

L'invention concerne les réseaux de communication, et plus précisément l'allocation, en phase de planification, de capacités à des liens établis entre des noeuds d'un réseau de communication.

De façon très schématique, un réseau de communication peut être réduit à des équipements de réseau, comme par exemple des routeurs, connectés les uns aux autres par des liens et constituant chacun des noeuds chargés de router les flux de données (ou paquets de données) qu'ils reçoivent vers leurs destinations respectives.

Dans de tels réseaux, il est possible de calculer au niveau des noeuds ou du réseau le chemin (ou « path » en anglais) que chaque flux de données va devoir suivre pour parvenir au niveau de sa destination finale, éventuellement à moindre coût. Un tel chemin est constitué d'une séquence ordonnée de liens (ou « hops » en anglais) établis entre des paires de noeuds voisins (ou consécutifs), entre des noeuds source et de destination. Ces chemins sont généralement déterminés de manière à supporter un trafic choisi en fonction d'au moins un critère (avec ou sans contrainte(s)), comme par exemple la bande passante disponible, le nombre de liens, le coût administratif et le temps de transit.

Afin qu'un lien puisse supporter une surcharge de trafic induite par une rafale passagère (ou « burst » en anglais), il est par exemple possible de sur-dimensionner la capacité qui lui est allouée. C'est notamment ce que l'on fait dans le cas d'un routage reposant sur un unique chemin (ou « SP pour « Single-Path » en anglais).

Il est également possible de mettre en oeuvre un routage de type multi-chemins (ou MP pour « Multiple-Path » en anglais) en prévoyant pour un certain chemin, défini entre un noeud source et un noeud de destination, au moins un autre chemin, dit alternatif, disjoint du premier chemin, et défini entre ce même noeud source et ce même noeud de destination. Dans ce cas, on définit pour chaque chemin un seuil de trafic au-delà duquel on considère qu'il y a surcharge de trafic, et en cas de détection d'un dépassement de seuil on transfère la surcharge de trafic vers au moins un chemin alternatif au moins partiellement disjoint. Ce type de routage multi-chemins permet de mettre en oeuvre un mécanisme dit de répartition de charge (ou « load balancing » en anglais) destiné à répartir le trafic au sein du réseau et/ou anticiper les congestions de lien(s), et donc de router plus de trafic et de mieux dimensionner le réseau. Des algorithmes de routage mettant en oeuvre de tels mécanismes sont notamment décrits dans les documents brevet FR 2869746 (ou EP 1615397) et EP 1557986 (il s'agit plus précisément d'algorithmes de routage multi-critères adaptatif appelés RMC (pour « Routing with Multiple Criteria »)).

L'inconvénient principal du routage de type mono-chemin réside dans le fait qu'il nécessite un sur-dimensionnement important du réseau qui induit des surcoûts importants. En outre, les opérateurs de réseau considèrent généralement qu'un sur-dimensionnement robuste ne saurait être réaliste.

Afin de limiter ce sur-dimensionnement dans les réseaux à routage de type mono-chemin, une solution a été proposée. Elle est notamment décrite dans le document de R. Guerin at al, "Equivalent Capacity and Its Application to Bandwidth Allocation in High-Speed Networks", IEEE Journal on Selected Areas in Communications, Volume 9, Issue 7, September 1991, pages 968-981...

Cette solution consiste à estimer la capacité devant être allouée à un lien donné (appelée « capacité équivalente ») en considérant, d'une part, des caractéristiques statistiques (valeur moyenne du débit (m) et variance ($\sigma$) correspondante) sur des flux empruntant ce lien donné, et d'autre part, le niveau de service (ou GoS pour « Grade of Service ») requis (via un paramètre $\alpha$ correspondant à une probabilité maximale autorisée de surcharge du noeud placé en amont dudit lien donné). Plus précisément, la capacité C(L) allouée au lien (L) est donnée par la relation $C(L) = m + \alpha.\sigma$.

Cette solution est bien adaptée aux réseaux à routage de type mono-chemin, dans lesquels il n'existe pas de seuil de surcharge. Mais, elle n'est pas entièrement satisfaisante dans le cas des réseaux mettant en oeuvre par défaut un routage de type mono-chemin et intégrant une détection de seuil de surcharge de manière à basculer vers un routage de type multi-chemins en cas de détection d'une surcharge en anticipation d'une éventuelle congestion, permettant ainsi de transporter plus de trafic. Il est rappelé que le réseau est principalement dimensionné, en phase de planification, à partir d'une matrice de trafic comportant les estimations des demandes de trafic à transporter pendant une durée prédéterminée. Sachant que les matrices de trafic sont stables et que l'on n'attend pas que l'outil de planification prenne en compte les vraies augmentations (tendancielles) de la demande, on tire profit de l'aptitude à transporter plus de trafic (offerte par le basculement précité) pour allouer moins de capacités aux liens pour un niveau de service (GoS) donné.

Une autre solution est décrite dans le document de K Bür et al: "A virtual path routing algorithm for ATM networks based on the equivalent bandwidth concept", COMPUTER COMMUNICATIONS, ELSEVIER SCIENCE PUBLISHERS BV, AMSTERDAM, NL, vol. 23, no. 4, février 2000, pages 379-394, XP004188274 ISSN: 0140-3664.

L'invention a donc pour but d'améliorer la situation, notamment en permettant d'optimiser (en phase de planification) les capacités allouées aux différents liens d'un réseau pouvant basculer d'un routage mono-chemin par défaut vers un routage multi-chemins en cas de surcharge de trafic. Elle propose à cet effet un dispositif d'allocation de capacités de liens entre des noeuds d'un réseau de communication, ledit dispositif comprenant des moyens de calcul tels, qu'en présence :

**a)** d'au moins deux chemins au moins partiellement disjoints définis entre un même noeud source et un même noeud de destination, chaque chemin passant par au moins un noeud intermédiaire, ces chemins étant au moins partiellement disjoints parce qu'ils passent respectivement par noeuds intermédiaires qui sont reliés au noeud source respectivement par liens distincts, dits liens disjoints,

**b)** d'au moins une demande de trafic entre lesdits noeuds source et de destination, définie par une moyenne et une variance correspondante, et

**c)** de demandes de trafic entre ledit noeud source et chaque noeud intermédiaire lié audit noeud source par un desdits liens disjoints desdits chemins, ces demandes étant définies chacune par une moyenne et une variance correspondante,

ces moyens de calcul sont agencés pour:

**i)** agréger lesdites demandes de trafic ayant ledit noeud source pour origine, de manière à constituer une demande agrégée définie par une moyenne agrégée égale à la somme des moyennes respectives desdites demandes de trafic et une variance agrégée correspondante égale à la racine carrée de la Somme des carrés des variances respectives desdites demandes de trafic,

**ii)** puis allouer une capacité agrégée correspondant à ladite demande agrégée et propre à être répartie entre lesdits liens disjoints partant dudit noeud source,

**iii).** en cas de besoin d'allocation de capacité pour satisfaire à chaque demande de trafic devant emprunter l'un desdits liens disjoints sortant dudit noeud source,

- **a)** déterminer la valeur d'un produit entre ladite capacité agrégée et un rapport entre, d'une part, la somme des demandes de trafic qui doivent emprunter le lien disjoint considéré, et d'autre part, la somme de toutes les demandes de trafic qui doivent emprunter chacun desdits liens disjoints sortant dudit noeud source,
- **b)** pour allouer audit lien disjoint une capacité de lien au moins égale à ladite valeur déterminée dudit produit,

**iv)** allouer à chaque lien disjoint un complément de capacité propre à supporter une augmentation momentanée de trafic susceptible de survenir pendant la détermination d'une répartition de charge entre lesdits chemins au moins partiellement disjoints consécutivement à la détection d'une surcharge de trafic sur l'un d'entre eux. Les moyens de calcul du dispositif selon l'invention peuvent comporter d'autres caractéristiques qui peuvent être prises séparément ou en combinaison, et notamment :

- ils peuvent par exemple allouer une capacité agrégée au moins égale à la demande agrégée ;
- ils peuvent par exemple constituer une demande agrégée égale à la somme de la moyenne agrégée et d'un produit entre la variance agrégée et une constante représentative du niveau de qualité (GoS) requis ;
- lorsqu'ils doivent allouer une capacité pour satisfaire à chaque demande de trafic devant emprunter l'un des liens disjoints sortant du noeud source, ils peuvent par exemple a) déterminer la valeur du produit entre la capacité agrégée et le rapport entre, d'une part, la somme des demandes de trafic qui doivent emprunter le lien disjoint considéré, et d'autre part, la somme
- de toutes les demandes de trafic qui doivent emprunter chacun des liens disjoints sortant: du noeud source, puis b) allouer au lien disjoint considéré une capacité au moins égale à la valeur déterminée du produit ;

➢ ils peuvent par exemple allouer à chaque lien un complément de capacité permettant de supporter une augmentation momentanée de trafic susceptible de survenir (en phase opérationnelle) pendant la détermination d'une répartition de charge entre les chemins disjoints consécutivement à la détection d'une surcharge de trafic sur l'un d'entre eux ;

○ ils peuvent par exemple allouer un complément de capacité fonction d'un pourcentage choisi de la capacité qui est allouée au lien disjoint considéré. Par exemple, le pourcentage est choisi dans un intervalle compris entre 50% et 100% ;

- ils peuvent être chargés de déterminer les chemins disjoints en fonction d'au moins un critère.

L'invention propose également un ordinateur de planification (dédié(e) à la gestion centralisée du réseau), pour un réseau de communication, équipé d'un dispositif d'allocation de capacités de liens du type de celui présenté ci-avant.

L'invention est particulièrement bien adaptée, bien que de façon non exclusive, aux réseaux de communication à protocole Internet (ou IP), éventuellement à plan de contrôle MPLS (« MultiProtocol Label Switching » - commutation d'étiquettes) ou GMPLS (« Generalized MPLS »), qu'ils soient ou non assujettis à une détection de surcharge de trafic par rapport à un seuil (fréquemment appelé ThLoad).

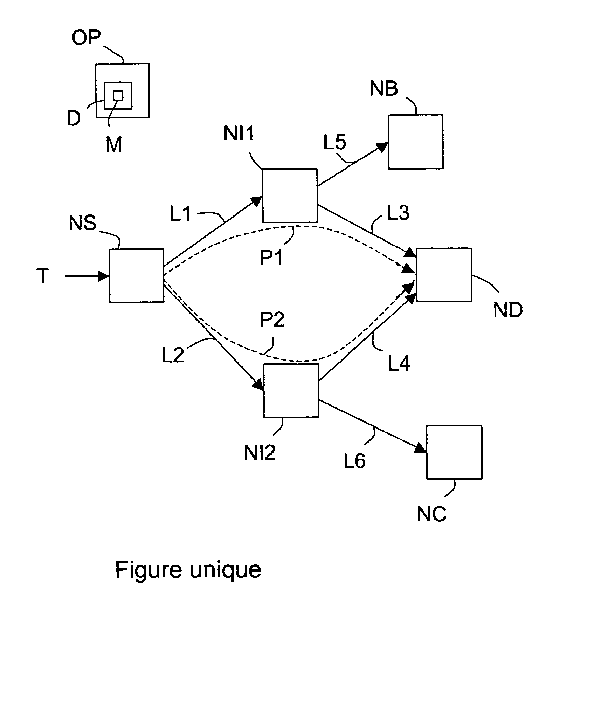

D'autres caractéristiques et avantages de l'invention apparaîtront à l'examen de la description détaillée ci-après, et du dessin annexé, sur lequel l'unique figure illustre de façon très schématique les liens entre six noeuds d'un réseau de communication.

Le dessin annexé pourra non seulement servir à compléter l'invention, mais aussi contribuer à sa définition, le cas échéant.

L'invention a pour objet de permettre l'optimisation des capacités qui sont allouées aux liens d'un réseau de communication capable de basculer d'un routage mono-chemin (SP) par défaut vers un routage multi-chemins (MP) en cas de surcharge de trafic.

Dans ce qui suit, on considère à titre d'exemple non limitatif que le réseau de communication est de type IP. Mais, l'invention n'est pas limitée à ce type de réseau de communication. Elle concerne en effet tous les réseaux mettant en oeuvre un algorithme de routage de paquets de données qui, par défaut, est de type mono-chemin (par exemple basé sur un routage de type Dijkstra) et qui bascule vers un routage de type multi-chemins, éventuellement en cas de détection d'une surcharge de trafic sur un lien (correspondant à un dépassement du seuil de surcharge de ce lien), et qui supporte, si le déclenchement et/ou le déroulement du routage multi-chemins est assujetti à la charge des liens, une gestion de trafic de type TE-LSA (pour « Trafic Engineering - Link State Advertisement »), comme par exemple le protocole de routage d'état de liaison OSPF-TE (pour « Open Shortest Path First - Trafic Engineering ») ou le protocole IS-IS-TE (pour « Intermediate System - Intermediate System - Trafic Engineering »). Elle concerne donc, notamment, les réseaux IP et les réseaux à commutation d'étiquettes (ou label switched network), comme par exemple ceux de type IP (G)MPLS.

Par ailleurs, l'invention concerne tout type de trafic, et notamment les trafics IP (par exemple pair à pair (ou « peer to peer » en anglais) et/ou Internet), les trafics de voix, les trafics de vidéo et les trafics transactionnels.

Un réseau IP comporte généralement, une multiplicité de noeuds, se présentant généralement sous la forme de routeurs, couplés les uns aux autres par des liens, et chargés d'aiguiller des paquets de données.

On entend ici par « lien » une connexion entre deux routeurs (ou noeuds), et par « chemin » un trajet entre un routeur (ou noeud) source et un routeur (ou noeud) de destination, défini par une séquence de liens.

Un chemin est généralement calculé de manière à optimiser la transmission de trafic entre un routeur source (ci-après appelé noeud source) et un routeur de destination (ci-après appelé noeud de destination). Ce calcul se fait initialement en mode mono-chemin, par exemple en fonction du critère de plus petite longueur (en termes de nombre de liens (ou sauts)), et de préférence en mettant en oeuvre la technique dite Dijkstra.

Dans l'exemple très schématique, et non limitatif, illustré sur l'unique figure, le réseau IP ne comporte que six noeuds. Par exemple, le noeud NS est un routeur source de trafics T, les noeuds ND, NB et NC sont des routeurs destinataires de trafic(s), et les noeuds NIj (NI1 et NI2, j = 1 et 2) sont des routeurs constituant ici des noeuds intermédiaires.

Bien entendu, le réseau peut comprendre n'importe quels nombres de noeud source, de noeud de destination et de noeud intermédiaire.

Dans l'exemple illustré, deux chemins Pi (P1 et P2, i = 1 et 2) sont définis en phase de planification entre le noeud source NS et un premier noeud de destination ND. Le premier chemin P1 passe par le premier noeud intermédiaire NI1 et est constitué de deux liens L1 et L3. Le second chemin P2 passe par le second noeud intermédiaire NI2 et est également constitué de deux liens L2 et L4. Ces deux chemins P1 et P2 sont donc disjoints. Par ailleurs, le premier noeud intermédiaire NI1 est également connecté à un deuxième noeud de destination NB par un lien L5, et le second noeud intermédiaire NI2 est également connecté à un troisième noeud de destination NC par un lien L6.

Grâce à ces connexions, les noeuds source NS et de destination ND pourront échanger des trafics via les chemins P1 et/ou P2. En général, l'un des deux chemins, par exemple le premier P1, est celui qui est destiné à être utilisé pour l'échange de trafic en l'absence de surcharge, tandis que l'autre chemin, par exemple le second P2, est un chemin alternatif destiné à être utilisé pour transporter, notamment, la surcharge de trafic. Bien entendu, le nombre de chemins disjoints (au moins partiellement), définis en phase de planification entre des noeuds source et destination, peut être supérieur à deux.

Il est rappelé qu'en phase opérationnelle (et non en phase de planification) une surcharge de trafic se produit chaque fois que le trafic qui emprunte un lien Lj dépasse un seuil de charge (ThLoad*C(Lj), où C(Lj) est la capacité allouée au lien Lj, sans tenir compte des augmentations momentanées estimées TLTI(Lj) sur lesquelles on reviendra plus loin) qui est associé à ce lien Lj. ThLoad est par exemple égal à 90% (ce qui donne un seuil de charge égal à 0,9*C(Lj). Mais, ThLoad est généralement compris entre 50% et 100%, et le plus souvent entre 75% et 95% dans le cas des algorithmes multi-critères adaptatifs décrits dans les documents brevet précités (FR 2869746 (ou EP 1615397) et EP 1557986).

L'invention propose d'intégrer dans un ordinateur (ou une machine) OP, chargé(e) de la planification du réseau, un dispositif d'allocation de capacités de liens D.

Comme cela est schématiquement illustré sur l'unique figure, ce dispositif D comprend essentiellement un module de calcul MC chargé d'intervenir chaque fois que trois conditions se présentent et que son dispositif D est sollicité.

La première condition, annoncée ci-avant, est relative à la définition de chemins. Plus précisément, il faut qu'au moins deux chemins disjoints (ici P1 et P2) soient définis entre un noeud source (ici NS) et au moins un des noeuds de destination (ici ND), via des noeuds intermédiaires, ici NI1 et NI2, respectivement.

La deuxième condition porte sur le trafic que doivent s'échanger les noeuds source (ici NS) et de destination (ici ND). Plus précisément, il faut qu'ait été définie au moins une demande de trafic D(NS,ND) entre les noeuds source NS et de destination ND, via l'un des chemins qui les relie, par exemple P1. Cette demande de trafic doit être définie par deux attributs : une valeur moyenne de débit M(NS,ND), ci-après appelée moyenne, et une variance (ou écart type) $\Sigma$(NS,ND) par rapport à cette moyenne M(NS,ND).

La troisième condition porte sur les trafics que doivent s'échanger le noeud source (ici NS) et chaque noeud intermédiaire NIj qui est lié au noeud source NS par un lien Lj appartenant à l'un quelconque des chemins disjoints Pi. Plus précisément, dans l'exemple illustré il faut qu'aient été définies une demande de trafic D(NS,NI1) entre le noeud source NS et le premier noeud intermédiaire NI1 via le lien L1 du premier chemin P1, et une demande de trafic D(NS, NI2) entre le noeud source NS et le second noeud intermédiaire NI2 via le lien L2 du second chemin P2. Par exemple, le trafic entre le noeud source NS et le premier noeud intermédiaire NI1, qui correspond à la demande (D(NS,NI1), a par exemple pour destination le noeud de destination NB, tandis que le trafic entre le noeud source NS et le second noeud intermédiaire NI2, qui correspond à la demande (D(NS,NI2), a par exemple pour destination le noeud de destination NC. Chacune de ces demandes de trafic doit être également définie par deux attributs : une valeur moyenne de débit M(NS,NIj), ci-après appelée moyenne, et une variance (ou écart type) $\Sigma$(NS,NIj) par rapport à cette moyenne M(NS,NIj).

Ces trois conditions concernent donc toutes un même noeud source NS, qui reçoit des trafics à aiguiller et les noeuds auxquels il est rattaché soit directement par des liens Lj (ici les deux noeuds intermédiaires NIj (NI1 et NI2)), soit indirectement via les chemins disjoints Pi (ici P1 et P2).

On notera que les deuxième et troisièmes conditions peuvent être fusionnées en une seule condition relative à la présence d'un ensemble de demandes de trafic devant emprunter chacun des liens disjoints Lj sortant du noeud source NS.

On notera également que les moyennes (de débit) M qui constituent l'un des deux attributs des demandes de trafic (ou de capacité) sont les informations qui sont contenues dans la matrice de trafic d'un réseau ou d'une partie d'un réseau. Les variances $\Sigma$ sont en général des informations complémentaires par rapport aux informations contenues dans une matrice de trafic.

Par ailleurs, on notera que les définitions des chemins disjoints Pi (qui font l'objet de la première condition) sont par exemple déterminées par le dispositif D, en fonction des données topologiques du réseau, et d'au moins un critère (avec ou sans contrainte(s)) lié(e) à la qualité de service (QoS), comme par exemple la probabilité $P_\varepsilon$ d'avoir une surcharge sur un lien (sur laquelle on reviendra plus loin). Par exemple, le dispositif D peut déterminer tout d'abord les chemins les plus courts, puis il détermine les capacités qu'il doit allouer aux liens qui constituent les chemins disjoints déterminés. Mais, on peut également envisager que le dispositif D ne soit pas configuré de manière à déterminer les chemins disjoints Pi. Dans ce cas, il reçoit les définitions de ces chemins disjoints Pi en tant qu'entrées, en même temps que les autres entrées que constituent les définitions des différentes demandes de trafic.

Lorsque les trois conditions précitées sont réunies, le module de calcul MC effectue deux opérations.

La première opération consiste à agréger toutes les demandes de trafic définies dans les conditions précitées et qui ont le noeud source NS pour origine, c'est-à-dire ici D(NS,ND), D(NS,NI1) et D(NS,NI2), afin de constituer une demande agrégée DA(NS) définie par une moyenne (de débit) agrégée MA(NS) et la variance agrégée $\Sigma$A(NS) correspondante.

La moyenne agrégée MA(NS) est égale à la somme des moyennes respectives des demandes de trafic définies dans les conditions précitées, soit ici MA(NS) = M(NS,ND) + M(NS,NI1) + M(NS,NI2).

Par exemple, lorsque M(NS,ND) = M(NS,NI1) = M(NS,NI2) = m, alors MA(NS) = 3m.

D'une manière générale, la moyenne agrégée MA(NS) est donnée par la relation $MA(NS) = \Sigma_{D(NS,jk)} Mjk$, où D(NS,jk) représente une demande de trafic k pour un lien Lj issu du noeud source NS, et Mjk représente la moyenne associée à cette demande de trafic k.

La variance agrégée $\Sigma$A(NS) est égale à la racine carrée de la somme des carrés des variances respectives de toutes les demandes de trafic définies dans les conditions précitées, soit ici :

$$\Sigma A(NS) = ((\Sigma(NS,ND))^2 + (\Sigma(NS,NI1))^2 + (\Sigma(NS,NI2))^2)^{1/2}.$$

Par exemple, lorsque $\Sigma$(NS,ND) = $\Sigma$(NS,NI1) = $\Sigma$(NS,NI2) = $\sigma$, alors $\Sigma$A(NS) = $\sigma.3^{1/2}$.

D'une manière générale, la variance agrégée $\Sigma$A(NS) est donnée par la relation $\sigma = \sqrt{\sum_{D(NS,jk)} \sigma jk^2}$ ,

où D(NS,jk) représente une demande de trafic k pour un lien Lj issu du noeud source NS, et σjk représente la variance associée à la moyenne Mjk de cette demande de trafic k.

La demande agrégée DA(NS) peut par exemple être égale à la somme de la moyenne agrégée MA(NS) et du produit entre la variance agrégée ΣA(NS) et une constante α qui est représentative du niveau de qualité (GoS) requis pour le trafic considéré en partance du noeud source NS.

Il est rappelé que le niveau de service (GoS) correspond par exemple à la probabilité Pε d'avoir une surcharge sur un lien, ε étant la valeur maximale autorisée pour Pε (Pε < ε). Par exemple, ε = $1.10^{-7}$ ou $1.10^{-8}$. La constante α est un paramètre de sécurité lié à la probabilité Pε. Par exemple, α peut être défini par la relation $\alpha = [-2\ln(\varepsilon) - \ln(2\pi)]^{1/2}$, comme proposé dans le document de R. Guerin et al. présenté ci-avant.

Dans l'exemple considéré ici on a donc la relation DA(NS) = MA(NS) + α.ΣA(NS), ce qui donne, si MA(NS) = 3m et ΣA(NS) = $\sigma.3^{1/2}$, DA(NS) = 3m + $\alpha.\sigma.3^{1/2}$.

Il est important de noter que chaque moyenne et chaque variance correspondante peuvent être représentatives d'un ou plusieurs types de trafic différents et indépendants. Plus précisément, ils peuvent être représentatifs d'une agrégation de flux d'applications différentes (correspondant à des trafics de types différents). Par exemple, si Ni désigne le nombre de flux d'une application Ai, si Mi et σi désignent respectivement la moyenne (de débit) et la variance correspondante des flux de l'application Ai, et si les flux des différentes applications Ai sont indépendants les uns des autres, alors on a :

$$m = \sum\nolimits_{Ai} Ni * Mi \; ,$$

et

$$\sigma = \sqrt{\sum\nolimits_{Ai} \sigma i^{2}} \; .$$

La seconde opération consiste à allouer une capacité agrégée CA(NS) qui est fonction au moins de la demande agrégée DA(NS). Cette capacité agrégée CA(NS) est la capacité totale qui va pouvoir être répartie entre tous les liens disjoints Lj (ici L1 et L2) qui ont pour origine le noeud source, ici NS, et qui appartiennent aux chemins disjoints Pi (ici P1 et P2) qui ont été définis entre ledit noeud source NS et le noeud de destination ND.

Grâce à l'agrégation des demandes de trafic associées aux liens disjoints Lj ayant pour origine un noeud source NS, proposée par l'invention, on constitue une demande agrégée DA(NS) qui est inférieure à la somme sur les liens disjoints Lj de ces mêmes demandes de trafic, qui est proposée dans les algorithmes de l'art antérieur. Par conséquent, la capacité totale à partager entre les liens disjoints Lj, ici appelée capacité agrégée CA(NS), est inférieure à celle résultant de la mise en oeuvre des algorithmes de l'art antérieur. Cela permet de réduire le dimensionnement du réseau.

Lorsque le module de contrôle MC dispose de la capacité agrégée CA(NS), il peut alors procéder à l'allocation de la capacité C(Lj) de chaque lien disjoint Lj (ici L1 et L2) qui a pour origine le noeud source, ici NS, et qui appartient à l'un quelconque des chemins disjoints Pi (ici P1 et P2) défini entre ledit noeud source NS et le noeud de destination ND.

Chaque allocation de capacité C(Lj) est déterminée en fonction des besoins définis pour satisfaire un trafic entre les noeuds source NS et de destination ND, via l'un des chemins disjoints Pi (ici P1 et P2). Par conséquent, dans l'exemple décrit, la capacité agrégée CA(NS) est répartie entre les liens L1 (C(L1)) et L2 (C(L2)).

Par exemple, la répartition se fait comme indiqué ci-après.

Le module de calcul MC détermine la valeur du produit entre la capacité agrégée CA(NS) et un ratio de demandes de trafic pour le (premier) lien Lj (ici L1) entre le noeud source (ici NS) et le noeud intermédiaire concerné (ici NI1).

Ce ratio est plus précisément constitué d'un numérateur NU et d'un dénominateur DR définis ci-après. Le numérateur NU est égal à la somme de toutes les demandes D(NS,ND) et D(NS,NIj) de trafic devant emprunter le lien Lj (ici L1) connecté au noeud source NS et appartenant au chemin disjoint P1.

Dans l'exemple décrit, le lien L1 est utilisé pour transporter le trafic entre les noeuds source NS et destination ND, qui est défini par la demande D(NS,ND), et le trafic entre le noeud source NS et le premier noeud intermédiaire NI1, qui est défini par la demande D(NS,NI1) et qui est par exemple destiné au noeud de destination NB. Par conséquent, dans cet exemple le numérateur NU est donné par la relation NU = D(NS,ND) + D(NS,NI1).

Le dénominateur DR est égal à la somme de toutes les demandes D(NS,NIj) de trafic devant emprunter les différents liens Lj (ici L1 et L2) qui sont connectés au noeud source NS et qui appartiennent à l'un quelconque des chemins disjoints Pi (ici P1 et P2) et de la demande D(NS,ND) de trafic devant emprunter le lien L1.

Dans l'exemple décrit, le lien L2 n'est utilisé par défaut que pour transporter le trafic entre le noeud source NS et le second noeud intermédiaire N12, qui est défini par la demande D(NS,NI2) et qui est par exemple destiné au noeud de destination NC. Par conséquent, dans cet exemple le dénominateur DR est donné par la relation DR = D(NS,ND) + D(NS,NI1) + D(NS,NI2).

Dans l'exemple décrit, le ratio NU/DR est donc donné par la relation : NU/DR = [D(NS,ND) + D(NS,NI1)] / [D(NS,ND) + D(NS,NI1) + D(NS,NI2)], et donc la capacité C(L1) allouée au lien L1 est donnée par la relation : C(L1) = CA(NS) * (NU/DR), dont le développé est :

$$C(L1)=CA(NS)*[D(NS,ND)+D(NS,NI1)] \, / \, [\, D(NS,ND)+D(NS,NI1)+D(NS,NI2)].$$

Dit autrement, la capacité C(L1) allouée au lien L1 est égale à la demande agrégée de trafic DA(L1) relative au lien L1, laquelle est définie par la relation DA(L1) = DA(NS) * (NU/DR) = CA(NS) * (NU/DR).

Ensuite, ou en parallèle, le module de calcul MC détermine la valeur du produit entre la capacité agrégée CA(NS) et un ratio de demandes de trafic pour chaque autre lien Lj' (ici seulement le second L2) entre le noeud source (ici NS) et le noeud intermédiaire concerné (ici seulement le second NI2).

Ce ratio est plus précisément constitué d'un numérateur NU' défini ci-après et du dénominateur DR défini ci-avant. Le numérateur NU' est égal à la somme de toutes les demandes de trafic devant emprunter un lien Lj' (ici L2) connecté au noeud source NS et appartenant à l'un des autres chemins disjoints (ici seulement le second P2) définis entre les noeuds source NS et de destination ND.

Dans l'exemple décrit, le lien L2 n'est utilisé par défaut que pour transporter le trafic entre le noeud source NS et le second noeud intermédiaire N12, qui est défini par la demande D(NS,NI2) et qui est par exemple destiné au noeud de destination NC. Par conséquent, dans cet exemple le numérateur NU' est donné par la relation NU' = D(NS,NI2).

Dans l'exemple décrit, le ratio NU'/DR est donc donné par la relation : NU'/DR = D(NS,NI2) / [D(NS,ND) + D(NS,NI1) + D(NS,NI2)], et donc la capacité C(L2) allouée au lien L2 est donnée par la relation : C(L2) = CA(NS) * (NU'/DR), dont le développé est :

$$C(L2)=CA(NS)*D(NS,NI2) \, / \, [\, D(NS,ND)+D(NS,NI1)+D(NS,NI2)].$$

Dit autrement, la capacité C(L2) allouée au lien L2 est égale à la demande agrégée de trafic DA(L2) relative au lien L2, laquelle est définie par la relation DA(L2) = DA(NS) * (NU'/DR) = CA(NS) * (NU'/DR).

Si l'on ne prend pas en compte les augmentations momentanées estimées de trafic sur les liens disjoints Lj (ici L1 et L2), également appelées rafales (ou bursts) et référencées ici TLTI (pour « Time Limited Traffic Increase »), qui peuvent survenir pendant la durée DUR qui s'écoule entre la détection d'une surcharge sur au moins un lien et l'instauration du routage multi-chemins permettant de résorber cette surcharge, alors les capacités C(Lj) allouées aux différents liens Lj sont définies par des relations du type de celles données ci-avant. Cela revient à dire que la capacité agrégée CA(NS) qui est répartie entre les différents liens disjoints Lj, ayant pour origine le noeud source NS et appartenant aux chemins disjoints Pi définis entre ce noeud source NS et un noeud de destination (ici ND), est égale à la demande agrégée DA(NS) définie ci-dessus.

Mais, en variante, il est possible de prendre en compte ces augmentations momentanées estimées de trafic sur les liens disjoints Lj (TLTI(Lj)) pendant la durée DUR définie ci-avant. Il est rappelé que cette durée DUR varie en fonction du type d'algorithme de routage multi-chemins qui est mis en oeuvre. Par exemple, cette durée DUR est comprise entre environ 10 secondes et environ 30 secondes dans le cas du routage DMLB. Il est également rappelé que l'augmentation TLTI(Lj) est un niveau de sécurité qui est généralement instauré par l'opérateur d'un réseau de sorte que la charge de trafic d'un lien Lj n'excède pas 100% de la capacité de ce lien Lj pendant la durée DUR.

Chaque augmentation TLTI(Lj) (tout comme chaque ThLoad utilisé pour définir le seuil de surcharge) peut être soit fourni(e) au module de calcul MC, soit déterminé(e) par ce dernier. Par exemple, on peut avoir la relation suivante entre ThLoad(Lj) et TLTI(Lj) : TLTI(Lj) = C(Lj) *(1-ThLoad(Lj)), ce qui peut se réécrire ThLoad(Lj) = 1 - [TLTI(Lj) / C(Lj)].

Lorsque l'on tient compte des augmentations TLTI(Lj), le module de calcul ajoute à chaque capacité C(Lj) allouée à un lien disjoint Lj un complément de capacité égal à TLTI(Lj).

La capacité C(L1) allouée au lien disjoint L1 est alors égale à la somme de la demande agrégée de trafic DA(L1) relative au lien disjoint L1 et de l'augmentation TLTI(L1), soit C(L1) = DA(L1) + TLTI(L1), ce qui peut se réécrire C(L1) = DA(L1) / ThLoad(L1) compte tenu de la relation donnée ci-avant (TLTI(L1) = C(L1) *(1-ThLoad(L1))). De même, la capacité C(L2) allouée au lien disjoint L2 est alors égale à la somme de la demande agrégée de trafic DA(L2) relative au lien disjoint L2 et de l'augmentation TLTI(L2), soit C(L2) = DA(L2) + TLTI(L2), ce qui peut se réécrire C(L2) = DA(L2) / ThLoad(L2) compte tenu de la relation donnée ci-avant (TLTI(L2) = C(L2) *(1-ThLoad(L2))).

Le dispositif d'allocation de capacités de liens D selon l'invention, et notamment son module de calcul MC, est préférentiellement réalisé sous la forme de modules logiciels (ou informatiques). Mais, il pourrait également être réalisé sous la forme de circuits électroniques, ou d'une combinaison de circuits et de logiciels.

L'invention peut être également considérée sous la forme d'un procédé dont les étapes sont constituées par les actions (opérations et traitements) effectuées par le dispositif D.

Grâce à l'invention, l'économie par rapport à une solution de l'art antérieur de la capacité totale pouvant être allouée à N liens disjoints Lj partant d'un noeud source NS, est donnée par la relation suivante, si on a N demandes réparties respectivement sur les N liens disjoints :

$$S(NS) = \alpha \left( \sum\nolimits_{D(NS,jk)} \sigma jk - \sqrt{\sum\nolimits_{D(NS,jk)} \sigma jk^2} \right) - \sum\nolimits_{Lj} TLTI(Lj) \, .$$

Il est important de noter que cette relation n'est valable qu'à condition que la demande de trafic soit définie par la relation C(x) = M(x) + $\alpha.\Sigma(x)$.

En présence de N demandes D(NS,jk) ayant les mêmes attributs (moyenne m et variance $\sigma$) alors l'économie de capacité S(NS) se réécrit :

$$S(NS) = \alpha \sigma \left( N - \sqrt{N} \right) - \sum\nolimits_{Lj} TLTI(Lj) \, .$$

Par conséquent, l'économie de capacité S(NS) est proportionnelle au nombre N de liens disjoints Lj qui partent d'un noeud source NS, à la variance $\sigma$, et au paramètre $\alpha$ qui est proportionnel à la probabilité maximale autorisée $\varepsilon$ d'avoir une surcharge de trafic. Rapportée à un lien Lj, l'économie de capacité S(Lj) s'écrit :

$$S(Lj) = \alpha \sigma \frac{NU(Lj)}{DR(NS)} \left( N - \sqrt{N} \right) - TLTI(Lj) \, ,$$

où NU(Lj) est le numérateur NU (ou NU') défini ci-avant pour le lien Lj (ou Lj') et DR(NS) est le dénominateur DR défini ci-avant pour le noeud source NS.

L'invention est avantageuse par rapport à l'art antérieur, lorsque S(Lj) > 0, ce qui revient à avoir la relation :

$$\alpha \sigma \frac{NU(Lj)}{DR(NS)} \left( N - \sqrt{N} \right) > TLTI(Lj) \, .$$

Par exemple, si l'on a trois demandes (N = 3) sur deux liens L1 et L2, comme dans l'exemple décrit ci-avant, et si l'on prend $\alpha$ = 3.77, $\varepsilon$ = 1.10$^{-7}$, NU(L1)/DR(NS) = 1/3, NU(L2)/DR(NS) = 2/3, alors on doit choisir TLTI(L1) < 0,682.$\sigma$ et TLTI(L2) < 1,364.$\sigma$.

En présence de deux liens L1 et L2 partant d'un même noeud source NS, et en prenant $\alpha$ = 3.77, $\varepsilon$ = 1.10$^{-7}$, ThLoad = 90%, TLTI(Lj) = 0,1.C(Lj), m = 1 Gbits/s et $\sigma$ = 485 Mbits/s, on obtient une économie de capacité totale S(NS) d'environ 7,6% par rapport à l'art antérieur. En présence de deux liens L1 et L2 partant d'un même noeud source NS, et en prenant $\alpha$ = 5,916, $\varepsilon$ = 1.10$^{-8}$, ThLoad = 90%, TLTI(Lj) = 0,1.C(Lj), m = 1 Gbits/s et $\sigma$ = 485 Mbits/s, on obtient une économie de capacité totale S(NS) d'environ 10,8% par rapport à l'art antérieur. Avec trois demandes sur trois liens et avec les mêmes valeurs que celles mentionnées ci-dessus, on obtient des gains respectivement de 19% et de 25%.

L'invention ne se limite pas aux modes de réalisation de dispositif d'allocation de capacités de liens décrits ci-avant, seulement à titre d'exemple, mais elle englobe toutes les variantes que pourra envisager l'homme de l'art dans le cadre des revendications ci-après.

**Revendications**

**1.** Dispositif (D) d'allocation de capacités de liens entre des noeuds d'un réseau de communication, ledit dispositif comprenant des moyens de calcul (MC) tels, qu'en présence :

**a)** d'au moins deux chemins au moins partiellement disjoints (Pi) définis enture un même noeud source (NS) et un même noeud de destination (ND), chaque chemin (Pi) passant par au moins un noeud intermédiaire (NIj), ces chemins étant au moins partiellement disjoints parce qu'ils passent respectivement par noeuds intermédiaires (NI1, NI2, NIj) qui sont reliés au noeud source (NS) respectivement par liens distincts (L1, L2, Lj), dits liens disjoints,

**b)** d'au moins une demande de trafic (D(NS,ND)) entre lesdits noeuds source (NS) et de destination (ND), définie par une moyenne (M(NS,ND)) et une variance correspondante ($\Sigma$(NS,ND)), et

**c)** de demandes de trafic (D(NS,NIj)) entre ledit noeud source (NS) et chaque noeud intermédiaire (NIj) lié audit noeud source (NS) par un desdits liens disjoints (Lj) desdits chemins (Pi), ces demandes étant définies chacune par une moyenne (M(NS,NIj)) et une variance correspondante ($\Sigma$(NS,NIj)),

ces moyens de calcul sont agencés pour :

**i)** agréger lesdites demandes de trafic (D(NS,ND), D(NS,NIj)) ayant ledit noeud source (NS) pour origine, de manière à constituer une demande agrégée (DA(NS)) définie par une moyenne agrégée (MA(NS)) égale à la somme des moyennes respectives desdites demandes de trafic et une variance agrégée ($\Sigma$(NS)) correspondante égale à la racine carrée de la somme des carrés des variances respectives desdites demandes de trafic,

**ii)** puis allouer une capacité agrégée (CA(NS)) correspondant à ladite demande agrégée et propre à être répartie entre lesdits liens disjoints (Lj) partant dudit noeud source (NS),

**iii)** en cas de besoin d'allocation de capacité pour satisfaire à chaque demande de trafic devant emprunter l'un desdits liens disjoints (Lj) sortant dudit noeud source (NS),

-- **a)** déterminer la valeur d'un produit entre ladite capacité agrégée (CA(NS)) et un rapport entre, d'une part, la somme des demandes de trafic qui doivent emprunter le lien disjoint (Lj) considéré, et d'autre part, la somme de toutes les demandes de trafic qui doivent emprunter chacun desdits liens disjoints (Lj) sortant dudit noeud source (NS),

-- **b)** pour allouer audit lien disjoint (Lj) une capacité de lien C(Lj) au moins égale à ladite valeur déterminée dudit produit,

**iv)** allouer à chaque lien disjoint (Lj) un complément de capacité (TLTI(Lj)) propre à supporter une augmentation momentanée de trafic susceptible de survenir pendant la détermination d'une répartition de charge entré lesdits chemins au moins partiellement disjoints (Pi) consécutivement à la détection d'une surcharge de trafic sur l'un d'entre eux.

2. Dispositif selon la revendication 1, **caractérisé en ce que** lesdits moyens de calcul (MC) sont agencés pour allouer une capacité agrégée (CA(NS)) au moins égale à ladite demande agrégée (DA(NS)).

3. Dispositif selon l'une des revendications 1 et 2, **caractérisé en ce** lesdits moyens de calcul (MC) sont agencés pour constituer une demande agrégée (DA(NS)) égale, à la somme de ladite moyenne agrégée (MA(NS)) et d'un produit entre ladite variance agrégée ($\Sigma$(NS)) et une constante ($\alpha$) représentative d'un niveau de qualité requis.

4. Dispositif selon la revendication 1, **caractérisé en ce que** lesdits moyens de calcul (MC) sont agencés pour allouer un complément de capacité (TLTI(Lj)) fonction d'un pourcentage choisi (ThLoad) de la capacité (C(Lj)) allouée audit lien disjoint (Lj) considéré.

5. Dispositif selon la revendication 4, **caractérisé en ce que** ledit pourcentage (ThLoad) .est choisi dans un intervalle compris entre 50% et 100%.

6. Dispositif selon l'une des revendication 1 à 5, **caractérisé en ce que** lesdits moyens de calcul (MC) sont agencés pour déterminer lesdits chemins au moins partiellement disjoints (Pi) en fonction d'au moins un critère.

7. Ordinateur de planification de réseau de communication (OP), **caractérisé en ce qu'**il comprend un dispositif d'allocation de capacités de liens (D) selon l'une des revendications précédentes.

**Claims**

1.  Device (D) for the allocation of capacities to links between nodes of a communication network, such device comprising calculation means (MC) so that in the presence of

    a) at least two paths that are at least partially disjoint (Pi) defined between one and the same source node (NS) and one and the same destination node (ND), each path (Pi) passing through at least one intermediate node (NIj), such paths being at least partially disjoint because they pass, respectively, through intermediate nodes (NI1, NI2 NIj) that are linked to the source node (NS) by, respectively, distinct links (L1, L2, Lj), called disjoint links,
    b) at least one traffic request (D (NS, ND)) between the said source (NS) and destination (ND) nodes, defined by a mean (M(NS, ND)) and a corresponding variance (Σ(NS, ND)), and
    c) traffic requests (D(NS, NIj)) between the said source node (NS) and each intermediate node (NIj) linked to the said node (NS) by one of the said disjoint nodes (Lj) of the said paths (Pi), such requests being each defined by a corresponding mean (M(NS, NIj)) and variance (Σ(NS, NIj)),
    such calculation means being designed to:

    i) aggregate the said traffic requests (D(NS, ND)), D(NS, NIj) having the said source node (NS) as an origin, so as to constitute an aggregate request (DA(NS)) defined by an aggregate mean (MA(NS)) equal to the sum of the respective means of the said traffic requests and a corresponding aggregate variance (Σ(NS)) equal to the square root of the sum of squares of the respective variances of the said traffic requests.
    ii) then to allocate an aggregate capacity (CA(NS)) corresponding to the said aggregate request and capable of being distributed among the said disjoint links (Lj) starting from the said source node (NS)
    iii) in the event of need of a capacity allocation to satisfy each request for traffic having to use one of the said disjoint links (Lj) exiting the said source node (NS),

    a) determine the value of a product between the said aggregate capacity (CA(NS)) and in relation between, on the one hand, the sum of the requests for traffic that must use the disjoint link (Lj) under consideration, and on the other hand, the sum of all requests for traffic that must use each of the said disjoint links (Lj) exiting the said source node (NS),
    b) allocate to the said disjoint link (Lj) a link capacity C(Lj) at least equal to the said determined value of the said product,

    iv) allocate to each disjoint link (Lj) a capacity supplement (TLTI(Lj)) able to support a temporary traffic increase likely to occur during the determination of a charge distribution between the said at least partially disjoint paths (Pi) subsequent to the detection of a traffic surcharge on one of them.

2.  Device according to Claim 1, **characterized in that** said calculation means (MC) are configured to allocate an aggregate capacity (CA(NS)) at least equal to the said aggregate request (DA(NS)).

3.  Device according to one of Claims 1 and 2, **characterized in that** said calculation means (MC) are configured to constitute an aggregate capacity (DA(NS)) equal to the sum of the said aggregate mean (MA(NS)) and the product of the said aggregate variance (Σ(NS)) and a constant (a) that is representative of a required level of quality.

4.  Device according to Claim 1, **characterized in that** said calculation means (MC) are configured to allocate a capacity supplement (TL TI(Lj)) as a function of a selected percentage (ThLoad) of the capacity allocated to the said disjoint link (Lj) under consideration.

5.  Device according to Claim 4, **characterized in that** the said percentage (ThLoad) is chosen from within an interval comprised between 50% and 100%.

6.  Device according to one of Claims 1 to 5, **characterized in that** said calculation means (MC) are configured to determine the said at least partially disjoint paths (Pi) as a function of at least one criterion.

7.  Communication network planning computer (OP), **characterized in that** it comprises a device for the allocation of capacities to links (D) according to one of the previous Claims.

**Patentansprüche**

1. Vorrichtung (D) zur Zuweisung von Verbindungsbandbreiten zwischen Knoten eines Kommunikationsnetzwerks, wobei die besagte Vorrichtung Rechenmittel (MC) umfasst, so dass bei Vorhandensein von:

   a) mindestens zwei zumindest teilweise getrennten Pfaden (Pi), welche zwischen einem selben Quellknoten (NS) und einem selben Zielknoten (ND) definiert werden, wobei jeder Pfad (Pi) mindestens einen Zwischenknoten (NIj) durchläuft, wobei diese Pfade zumindest teilweise getrennt werden, weil sie jeweils Zwischenknoten (NI1, NI2, NIj) durchlaufen, welche jeweils über verschiedene Verbindungen (L1, L2, Lj) mit dem Quellknoten (NS) verknüpft sind,
   b) mindestens einer Verkehrsanforderung (D(NS,ND)) zwischen dem besagten Quellknoten (NS) und dem besagten Zielknoten (ND), welche anhand eines Mittelwerts (M(NS,ND)) und einer entsprechenden Varianz ($\Sigma$(NS,ND)) definiert wird, und
   c) Verkehrsanforderungen (D(NS,NIj)) zwischen dem besagten Quellknoten (NS) und jedem Zwischenknoten (NIj), welcher über eine der besagten getrennten Verbindungen (Lj) der besagten Pfade (Pi) mit dem besagten Quellknoten verknüpft ist, wobei diese Anforderungen jeweils anhand eines Mittelwerts (M(NS,NIj)) und einer entsprechenden Varianz ($\Sigma$(NS,NIj)) definiert werden, diese Rechenmittel fähig sind,

   i) die besagten Verkehrsanforderungen (D(NS,ND), D(NS,NIj)), welche von dem besagten Quellknoten (NS) ausgehen, zu aggregieren, um eine aggregierte Anforderung (DA(NS)) zu bilden, welche anhand eines aggregierten Mittelwerts (MA(NS)), welcher der Summe der jeweiligen Mittelwerte der besagten Verkehrsanforderungen entspricht, und einer entsprechenden aggregierten Varianz ($\Sigma$(NS)), welche der Quadratwurzel der Summe der Quadrate der jeweiligen Varianzen der besagten Verkehrsanforderungen entspricht, definiert wird,
   ii) anschließend eine aggregierte Bandbreite (CA((NS)), welche der besagten aggregierten Anforderung entspricht und unter den besagten getrennten Verbindungen (Lj), welche von dem besagten Quellknoten (NS) ausgehen, aufgeteilt werden kann, zuzuweisen,
   iii) bei Bedarf einer Bandbreitenzuweisung, um jede Anforderung von Verkehr, welcher eine der besagten von dem besagten Quellknoten (NS) ausgehenden getrennten Verbindungen (Lj) benutzen muss, zu befriedigen,

      -- a) den Wert eines Produktes zwischen der besagten aggregierten Bandbreite (CA((NS)) und einem Verhältnis zwischen der Summe der Anforderungen von Verkehr, welcher die betroffene getrennte Verbindung (Lj) benutzen muss, einerseits, und, der Summe aller Anforderungen von Verkehr, welcher eine jede der besagten von dem besagten Quellknoten (NS) ausgehenden getrennten Verbindungen (Lj) benutzen müssen, andererseits, zu bestimmen,
      -- b) der besagten getrennten Verbindung (Li) eine Verbindungsbandbreite C(Lj), welche mindestens dem bestimmten Wert des besagten Produktes entspricht, zuzuweisen,

   iv) jeder getrennten Verbindung (Lj) eine zusätzliche Bandbreite zuzuweisen, um einer eventuell während der Bestimmung einer Lastverteilung zwischen den besagten zumindest teilweise getrennten Pfaden (Pi) im Anschluss an das Erkennen einer Verkehrsüberlastung auf einem dieser Pfade auftretenden momentanen Verkehrszunahme standzuhalten.

2. Vorrichtung nach Anspruch 1, **dadurch gekennzeichnet, dass** die besagten Rechenmittel (MC) ausgelegt sind, um eine aggregierte Bandbreite (CA(NS)) zuzuweisen, welche mindestens der besagten aggregierten Anforderung (DA(NS)) entspricht.

3. Vorrichtung nach einem der Ansprüche 1 und 2, **dadurch gekennzeichnet, dass** die besagten Rechenmittel (MC) ausgelegt sind, um eine aggregierte Anforderung (DA(NS)) zu bilden, welche der Summe des besagten aggregierten Mittelwerts (MA(NS)) und eines Produktes zwischen der besagten aggregierten Varianz ($\Sigma$(NS)) und einer für den erforderlichen Qualitätsgrad repräsentative Konstante ($\alpha$) entspricht.

4. Vorrichtung nach Anspruch 1, **dadurch gekennzeichnet, dass** die besagten Rechenmittel (MC) ausgelegt sind, um eine zusätzliche Bandbreite (TLTI(Lj)) gemäß einem ausgewählten Prozentsatz (ThLoad) der der betroffenen getrennten Verbindung (Lj) zugewiesenen Bandbreite (C(Lj)) zuzuweisen.

5. Vorrichtung nach Anspruch 4, **dadurch gekennzeichnet, dass** der besagte Prozentsatz (ThLoad) in einem Bereich zwischen 50 % und 100 % gewählt wird.

6. Vorrichtung nach einem der Ansprüche 1 bis 5, **dadurch gekennzeichnet, dass** die besagten Rechenmittel (MC) ausgelegt sind, um die besagten zumindest teilweise getrennten Pfade (Pi) gemäß mindestens einem Kriterium zu bestimmen.

7. Rechner zur Planung eines Kommunikationsnetzwerks (OP), **dadurch gekennzeichnet, dass** er eine Vorrichtung für die Zuweisung von Verbindungsbandbreiten (D) gemäß einem der vorstehenden Ansprüche umfasst.

Figure unique

## RÉFÉRENCES CITÉES DANS LA DESCRIPTION

**Documents brevets cités dans la description**

- FR 2869746
- EP 1615397 A

- EP 1557986 A


**Littérature non-brevet citée dans la description**

- **R. Guerin.** Equivalent Capacity and Its Application to Bandwidth Allocation in High-Speed Networks. *IEEE Journal on Selected Areas in Communications,* Septembre 1991, vol. 9 (7), 968-981

- A virtual path routing algorithm for ATM networks based on the equivalent bandwidth concept. **K Bür et al.** COMPUTER COMMUNICATIONS. ELSEVIER SCIENCE PUBLISHERS BV, Février 2000, vol. 23, 379-394